# EUROPEAN PATENT SPECIFICATION

(11) **EP 0 515 381 B1**
(45) Date of publication and mention of the grant of the patent: **23.11.1994**
(21) Application number: 91901518.0
(22) Date of filing: 27.12.1990
(51) Int. Cl.: F16D 25/14

(54) **A CLUTCH CONTROL SYSTEM**
KUPPLUNGSSTEUERUNGSSYSTEM
SYSTEME DE COMMANDE D'EMBRAYAGE

(30) Priority: 24.02.1990 GB 9004202
(43) Date of publication of application: 02.12.1992
(73) Proprietor: AUTOMOTIVE PRODUCTS PLC, Leamington Spa Warwickshire CV31 3ER (GB)
(72) Inventor: PARSONS, David, Kenilworth CV8 1AB (GB); YOUNG, Alastair, John, Kenilworth CV8 1DW (GB)
(74) Representative: Stanley, Michael Gordon
(86) International application number: GB9002026
(87) International publication number: WO9113266

(56) References cited:
- WO-A-89/11045
- US-A- 4 674 613
- Patent Abstracts of Japan, vol. 10, no. 73 (M-463)(2130), 22 March 1986, & JP-A-60215431 (NIPPON JIDOSHA BUHIN SOGO KENKYUSHO K.K.) 28 October 1985

## Description

The present invention relates to a control system for a clutch which is engaged by a spring force and released by a fluid pressure actuator.

In many known forms of clutch control system of this type in which the actuator is controlled by an electrical signal, if there is an electrical failure the clutch tends towards a fully engaged position. If the failure occurs while the clutch is partially or fully disengaged, the clutch may re-engage suddenly, making the vehicle hard to control.

GB-A-1196130 discloses such a clutch control system in which the rate of re-engagement of a clutch is controlled following an electrical failure. WO-A-89/11045 discloses a clutch control system in which a clutch control valve includes a quick drain facility which give rapid release of clutch engaging pressure to prevent clutch drag or clutch disengagement.

A control system for a clutch which is engageable by a spring force and releasable by a hydraulic fluid pressure actuator, the control system comprising a source of fluid pressure, a drain and electrically operated control valve means to selectively connect the actuator to the source or to the drain, the control valve means being a spool valve having an inlet port connected to the source, a service port connected to the actuator, an outlet port connected to the drain, and a landed spool movable to open and close the ports, the system being characterised in that the spool is biased to a first position when the supply of electricity to the control valve ceases and when in said first position a land on the spool restricts the operative cross-section of the outlet port to control the rate of flow of fluid from the actuator to the drain and hence the rate of re-engagement of the clutch .

Preferred embodiments of the present invention will now be described by way of example only with reference to the accompanying drawings in which:
Fig 1 is a diagrammatic representation of a clutch operating system according to the invention;
Fig 2 is a section through a valve in the system of Fig 1;
Fig 3 is a view, partly in section, of the valve of Fig 2 coupled to a solenoid;
Fig 4 is a graph showing the flow characteristics of the valve of Fig 2, and
Fig 5 and Fig 6 are partial sections through valves incorporating modifications to the valve of Fig 2.

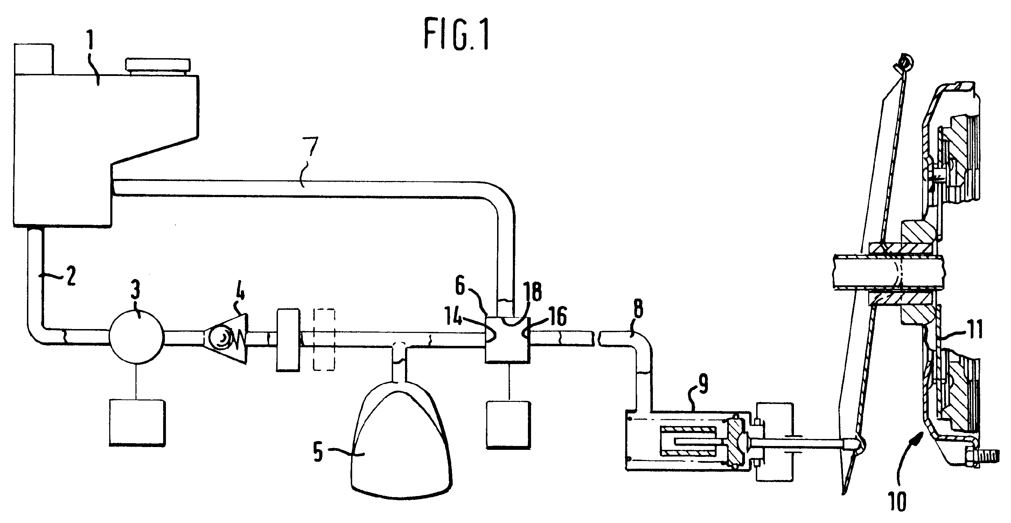

Referring to Fig 1 a control system for a clutch comprises a fluid reservoir 1, a fluid supply pipe 2 leading from the reservoir 1, via a pump 3 which forms a source of fluid pressure, a valve 4 and an accumulator 5 to a control valve 6. A drain 7 runs from the control valve 6 back to the reservoir 1. A service pipe 8 runs from the control valve 6 to a fluid pressure actuator 9 for a clutch 10. The clutch 10 has a diaphragm spring 11 which provides a spring force to engage the clutch. The actuator 9, controlled by operation of the control valve 6, can disengage the clutch 10.

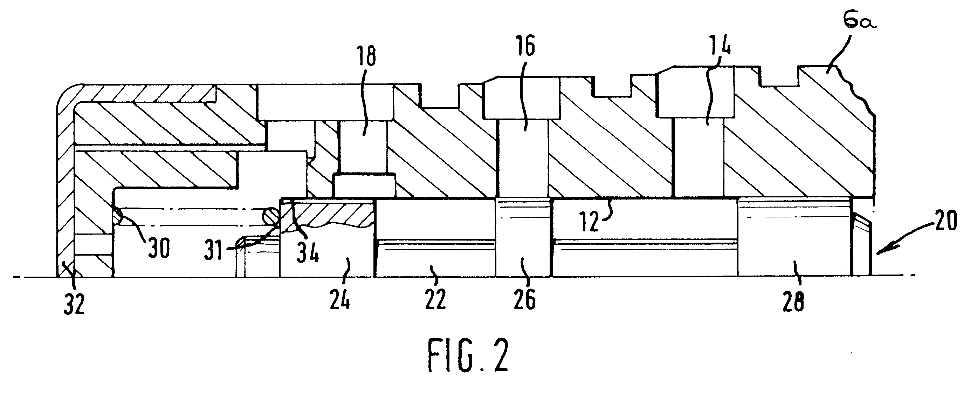

Referring to Fig 2, the valve 6 is a spool valve comprising a valve body 6a having an axial bore 12. An inlet port 14, a service port 16 and an outlet port 18 open into the bore 12. The inlet port 14 is connected to the fluid supply pipe 2, the service port 16 is connected to the service pipe 8, and the outlet port 18 is connected to the drain 7.

The ports 14, 16, 18 are spaced along the bore 12, the service port 16 being between the inlet port 14 and the outlet port 18. A flow control means in the form of a spool 20 is slidably positioned in the bore 12. The spool 20 comprises a first land 24, a second land 26 and a third land 28. The second land 26 is long enough to completely close the service port 16 when the spool 20 is in an intermediate null position as shown in Fig 2. The lands 24, 26, 28 are spaced along the spool 20 such that when the spool is in the null position the first land 24 covers a part of the outlet port 18 furthest from the service port 16, and the third land 28 is on the side of the inlet port 14 furthest from the service port 16 and does not cover the inlet port 14. The spool 20 is biased along the bore 12 in a first direction towards the inlet port 14 by means of a spring 30 which acts between a shoulder 31 adjacent the first land 24 and an end wall 32 of the valve. The first land 24 has a groove 34 running axially along its outer surface, the purpose of which will be explained later.

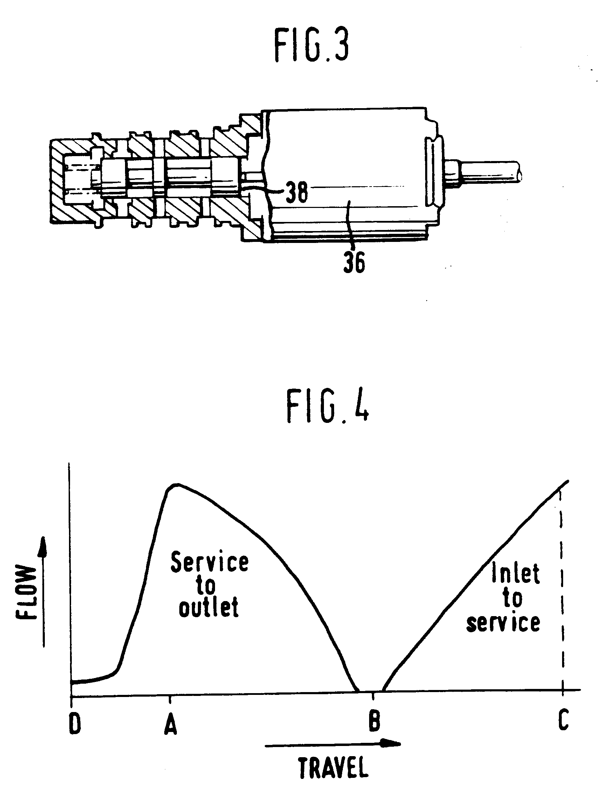

Referring to Fig 3, a solenoid 36 is arranged to exert a force on the end of the spool 38 nearest the inlet port 14. When current flows in the solenoid 36 it forces the spool 20 in a second direction towards the outlet port 18 and when current is switched off it allows the spool 20 to move in the first direction under the force of the spring 30.

Referring to Figs 3 and 4, during normal operation of the clutch 10 the spool 20 is moved between positions A, B, C and D. When the clutch 10 is engaged and no-current is flowing in the solenoid 36 the spool 20 rests in position D as shown in Fig 4. In position D the spool 20 is to the right of the position shown in Fig 2 such that the first land 24 covers the outlet port 18. The service port is connected to the outlet port by a passage formed by the groove 34. To disengage the clutch 10, the spool 20 is first moved to position A. In position A the spool 20 is to the right of the null position as shown in Fig 2 such that the service port 16 and the outlet port 18 are open an equal amount. This allows the maximum fluid flow from the service port 16 to the outlet port 18. The spool is then moved to the left as shown in Fig 1 into the null position corresponding to position B in Fig 3. Movement from position D to position B has no effect on the clutch 10 when it is engaged. The spool 20 is then moved further to the left which opens the service port 18 allowing fluid to flow from the inlet port 16 to the service port 18 which starts to disengage the clutch 10. The rate at which the clutch 10 disengages depends on how much the service port 18 is opened. Point C in Fig 3 corresponds to the postion where the spool 20 is moved as far to the left as possible. The clutch 10 can be held at any point between full engagement and full disengagement by returning the spool 20 to the null position.

To re-engage the clutch 10 the spool 20 is moved to the right of the null position. The rate of engagement increases as the spool 20 moves to the right until it reaches position A.

If due to some mechanical or electrical failure or for any other reason the solenoid cannot be or is not used to move the spool 20, the spool will move to position D. In position D the land 24 acts as a restrictor, the groove 34 forming a passage allowing fluid to flow slowly from the service port 16 to the outlet port 18. Thus if a failure occurs while the clutch is disengaged the spool 20 will move to position D and the clutch will re-engage gently, ensuring that maximum control of the vehicle can be maintained.

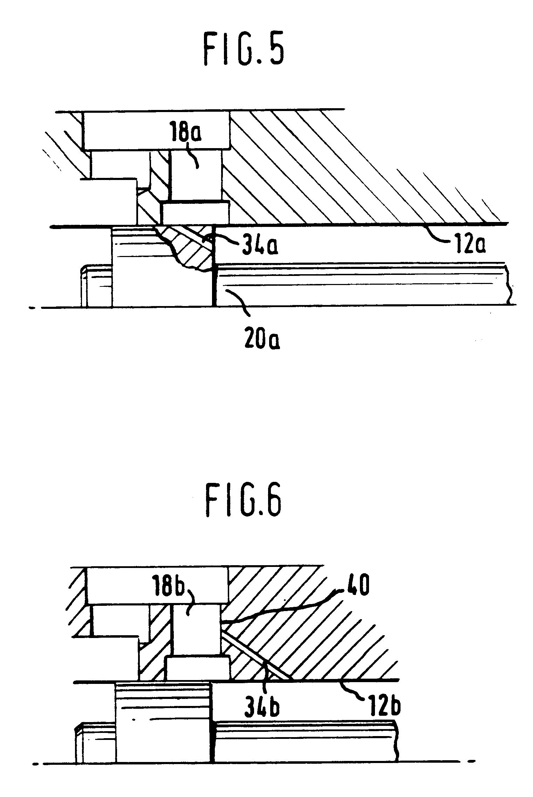

Referring to Fig 5, in an alternative embodiment instead of the groove 34, the spool 20a has a hole 34a therethrough which, when the spool 20a is in position D, forms a passage joining the outlet port 18a to the bore 12a.

Referring to Fig 6, in a modification of the embodiment of Fig 5, instead of the hole 36a in the spool 20a, the valve body 11b has a hole 34b therethrough joining one side 40 of the outlet port 18b to the bore 12b.

As a further alternative movement of the spool 20 could be restricted such that the outlet port 18 would not be quite closed when the spool is as far to the right as possible.

## Claims

1. A control system for a clutch (10) which is engageabe by a spring force (11) and releasable by a hydraulic fluid pressure actuator (9), the control system comprising a source (3) of fluid pressure, a drain (7) and electricity operated control valve means (6) to selectively connect the actuator to the source or to the drain, the control valve means (6) being a spool valve having an inlet port (14) connected to the source (3), a service port (16) connected to the actuator (9), an outlet port (18) connected to the drain (7), and a landed spool (20) movable to open and close the ports, the system being characterised in that the spool (20) is biased (30) to a first position (D) when the supply of electricity to the control valve (6) ceases and when in said first position (D) a land (24) on the spool (20) restricts the operative cross-section of the outlet port (18) to control the rate of flow of fluid from the actuator (9) to the drain (7) and hence the rate of re-engagement of the clutch (10).

2. A control system according to Claim 1 characterised in that the valve has a passage (34,34a,34b) therein through which fluid can flow when the spool is in the first position.

3. A control system according to Claim 2 characterised in that the passage (34,34a) is formed in the spool.

4. A control system according to Claim 3 characterised in that the passage is a groove (34) in the surface of the land (24).

5. A control system according to Claim 3 characterised in that the passage is a hole (34a) runnning through the spool.

6. A control system according to Claim 1 characterised in that the passage (34b) is formed in a body part of the valve.

## Patentansprüche

1. Steuerungssystem für eine Kupplung (10), die durch eine Federkraft (11) einkuppelbar ist, und die durch ein Betätigungselement (9) bei Anwendung eines Hydraulikflüssigkeitsdruckes trennbar ist, wobei das Steuerungssystem aufweist eine Quelle (3) des Flüssigkeitsdruckes, einen Abfluß (7) und ein elektrisch betätigtes Steuerventil (6), um selektiv das Betätigungselement mit der Quelle oder mit dem Abfluß zu verbinden, wobei das Steuerventil (6) ein Steuerkolbenventil ist, das eine Eintrittsöffnung (14), die mit der Quelle (3) verbunden ist, eine Betriebsöffnung (16), die mit dem Betätigungselement (9) verbunden ist, eine Austrittsöffnung (18), die mit dem Abfluß (7) verbunden ist, und einen mit einer hervorstehenden Fläche versehenen Steuerkolben (20) aufweist, der beweglich ist, um die Öffnungen zu öffnen und zu schließen, wobei das System dadurch gekennzeichnet wird, daß der Steuerkolben (20) in eine erste Position (D) gelenkt wird (30), wenn die Zuführung von Elektrizität zum Steuerventil (6) aufhört, und wenn in der ersten Position (D) eine hervorstehende Fläche (24) auf dem Steuerkolben (20) den wirksamen Querschnitt der Austrittsöffnung (18) begrenzt, um die Strömungsgeschwindigkeit der Flüssigkeit vom Betätigungselement (9) zum Abfluß (7) zu steuern und daher die Geschwindigkeit der Wiedereinkupplung der Kupplung (10).

2. Steuerungssystem nach Anspruch 1, dadurch gekennzeichnet, daß das Ventil einen Durchgang (34, 34a, 34b) darin aufweist, durch den die Flüssigkeit strömen kann, wenn sich der Steuerkolben in der ersten Position befindet.

3. Steuerungssystem nach Anspruch 2, dadurch gekennzeichnet, daß der Durchgang (34, 34a) im Steuerkolben gebildet wird.

4. Steuerungssystem nach Anspruch 3, dadurch gekennzeichnet, daß der Durchgang eine Nut (34) in der Oberfläche der hervorstehenden Fläche (24) ist.

5. Steuerungssystem nach Anspruch 3, dadurch gekennzeichnet, daß der Durchgang ein Loch (34a) ist, das durch den Steuerkolben verläuft.

6. Steuerungssystem nach Anspruch 1, dadurch gekennzeichnet, daß der Durchgang (34b) in einem Gehäuseteil des Ventils gebildet wird.

## Revendications

1. Un système de commande d'un embrayage (10) pouvant être enclenché par une force de ressort (11) et dégagé par un dispositif d'actionnement hydraulique à pression de fluide (9), le système de commande comprenant une source (3) de pression de fluide, un conduit de vidange (7) et un moyen de soupape de commande à actionnement électrique (6) pour connecter sélectivement le dispositif d'actionnement à la source ou au conduit de vidange, le moyen de soupape de commande (6) étant un distributeur à tiroir comportant un orifice d'entrée (14) connecté à la source (3), un orifice de service (16) connecté au dispositif d'actionnement (9), un orifice de sortie (18) connecté au conduit de vidange (7), et une tiroir à méplat (20) pouvant être déplacé pour ouvrir et fermer les orifices, le système étant caractérisé en ce que le tiroir (20) est poussé (30) vers une première position (D) lorsque l'alimentation électrique de la soupape de commande (6) est interrompue et lorsque, dans ladite première position (D) un méplat (24) sur le tiroir (20) restreint la section opérationnelle de l'orifice de sortie (18), en vue de la commande de la vitesse d'écoulement du fluide du dispositif d'actionnement (9) vers le conduit de vidange (7) et par suite la vitesse de réenclenchement de l'embrayage (10).

2. Un système de commande selon la revendication 1, caractérisé en ce que la soupape possède un passage interne (34, 34a, 34b), à travers lequel le fluide peut s'écouler lorsque le tiroir se trouve dans la première position.

3. Un système de commande selon la revendication 2, caractérisé en ce que le passage (34, 34a) est formé dans le tiroir.

4. Un système de commande selon la revendication 3, caractérisé en ce que le passage est une rainure (34) dans la surface du méplat (24).

5. Un système de commande selon la revendication 3, caractérisé en ce que le passage est un trou (34a) traversant le tiroir.

6. Un système de commande selon la revendication 1, caractérisé en ce que le passage (34b) est formé dans une partie du corps de la soupape.
